# EUROPÄISCHE PATENTSCHRIFT

(11) **EP 1 193 090 B1**
(45) Veröffentlichungstag und Bekanntmachung des Hinweises auf die Patenterteilung: **13.06.2007**
(21) Anmeldenummer: 01121123.2
(22) Anmeldetag: 04.09.2001
(51) Int. Cl.: B60J 5/10, F16F 1/373, F16F 15/08, F16F 1/44, E05F 5/02

(54) **Anschlagpuffer**
Stop buffer
Tampon de butée

(30) Priorität: 29.09.2000 DE 10048236
(43) Veröffentlichungstag der Anmeldung: 03.04.2002
(73) Patentinhaber: DaimlerChrysler AG, 70327 Stuttgart (DE)
(72) Erfinder: Schelling, Jan, 70839 Gerlingen (DE); Steffens, Ewald, 71272 Renningen (DE)

(56) Entgegenhaltungen:
- EP-A- 0 892 140
- EP-A- 0 943 773
- US-A- 5 482 348
- US-A- 5 735 511

## Beschreibung

Die Erfindung betrifft ein Verfahren zum Ausrichten eines Anschlagpuffers zum Abstützen eines ersten Bauteils an einem zweiten, wobei das erste Bauteil beweglich an dem zweiten befestigt ist, sowie ein System zum Abstützen der beiden Bauteile gegeneinander mit einem Anschlagpuffer. Bei den Bauteilen kann es sich beispielsweise um Türen, Hauben, Klappen oder andere bewegliche Karosserieteile von Kraftfahrzeugen handeln.

Die im Zusammenhang mit der Erfindung betrachteten Anschlagpuffer sind zwischen den zueinander beweglichen Bauteilen angeordnet. Sie erfüllen mehrere Aufgaben. Zum einen stützen sie die beiden Bauteile in axialer Richtung elastisch gegeneinander ab. Wenn im Folgenden von "axialer Richtung" gesprochen wird, ist damit die Richtung gemeint, in der Anschlagpuffer Kräfte aufnehmen, die beim Bewegen der Bauteile in eine Schließstellung entstehen. Eine Abstützung in axialer Richtung ist erforderlich, damit die zueinander beweglichen Teile in ihrer Schließstellung den richtigen Abstand zueinander einnehmen und um zu vermeiden, dass sie beim Schließen aufeinander stoßen. Elastisch sollte sie sein, damit das Einnehmen der Schließposition nicht zur hart erfolgt. Dies wird durch die Größe bzw. Erstreckung in axialer Richtung und das Material des Anschlagpuffers erreicht.

Zum anderen stützen Anschlagpuffer das bewegliche Bauteil in radialer Richtung ab. Wenn im Folgenden von "radialer Richtung" die Rede ist, so ist damit die Richtung gemeint, die senkrecht zur oben definierten axialen Richtung verläuft. Eine Abstützung in dieser Richtung ist notwendig, damit keine Ermüdungserscheinungen in den Anbindungen der Bauteile (beispielsweise an Scharnieren) auftreten. Solche Ermüdungserscheinungen können dadurch auftreten, dass das bewegliche Bauteil noch andere Bewegungen ausführt, als die für die die Anbindungen ausgelegt sind. Scharniere und Schlösser mit ihren bauteilspezifischen Toleranzen und Positionen reichen oftmals nicht aus, zusätzliche Bewegungen schwenkbarer Teile zu unterbinden. Eine Abstützung in radialer Richtung kann durch eine Führung des Puffers in radialer Richtung erzielt werden. Dadurch wird erreicht, dass der Puffer und über ihn das bewegliche Bauteil in der Schließstellung der beiden Bauteile immer wieder die selbe Stellung einnimmt und eine Bewegung während sich das Bauteil in der Schließstellung befindet in radialer Richtung unterbunden wird.

Ein solcher Anschlagpuffer ist beispielsweise aus der DE 195 20 492 A1 bekannt. Der bekannte Anschlagpuffer ist zwischen einem feststehenden Karosserieteil und einer Heckklappe angeordnet und hat einen Pufferfuß sowie einen Pufferkopf. Durch Druckbeaufschlagung einer Druckkammer im Anschlagpuffer läßt sich der Pufferkopf aus dem Pufferfuß herausfahren bis er einen Anschlag in Form einer Vertiefung in der Heckklappe, der als Führung des Puffers in radialer Richtung dient, berührt und bis eine bestimmte Vorspannung aufgebaut ist.

Nachteilig bei der Vorrichtung gemäß der DE 195 20 492 A1 ist jedoch, dass sie nur eine Einstellung des Puffers in axialer Richtung ermöglicht. Die Fertigung von gegeneinander beweglichen Bauteilen ist jedoch in der Regel mit Toleranzen behaftet. Das hat zur Folge, dass der Pufferkopf bei der Montage des Anschlagpuffers nicht immer genau gegenüber von dem Anschlag in der Heckklappe zu liegen kommt. Wenn die Toleranzabweichungen nicht zu groß sind, wird der Puffer durch seine Form bei jedem Schließvorgang in die Vertiefung des Anschlags hineinrutschen. Das hat jedoch zur Folge, dass das bewegliche Bauteil im geschlossenen Zustand jedes Mal unter Spannungen steht, die zu einer erhöhten Beanspruchung der Anbindungspunkte zwischen beweglichem Bauteil und Karosserie führen. Wenn die Abweichung zu groß ist, kommt der Pufferkopf nicht in der Vertiefung des Anschlags zu liegen und ein Schließen des beweglichen Bauteils ist nicht mehr oder nur noch mit sehr hohem Kraftaufwand möglich. Die Spannungen und damit die Beanspruchung der Anbindung, die sich in einem solchen Fall aufbauen, sind noch größer als in dem zuvor beschriebenen Fall.

Mit der bekannten Vorrichtung kann eine Abweichung des Puffers von seiner bezüglich des Anschlags vorgesehenen Position nicht ausgeglichen werden, da eine Justierung der Pufferanordnung in radialer Richtung nicht möglich ist. Sowohl die Vertiefung des Anschlags als auch die Befestigungsvorrichtungen für den Pufferfuß sind in die Bleche von Karosserie und Heckklappe eingebracht. Eine Möglichkeit zur Variation dieser Punkte ist nicht vorgesehen. Eine Einstellung muß über die Justierung der gesamten Motorhaube erfolgen. Eine derartige Justierung ist sehr zeitaufwendig, da die Anbindungsstellen in geschlossenem Zustand nicht zugänglich und mehrere Nachstelloperationen notwendig sind.

Das Gleiche gilt für die US 5,482,348 A. Diese Druckschrift offenbart ein Verfahren zum Ausrichten eines Anschlagpuffers zum Abstützen eines ersten Bauteils an einem zweiten, wobei das erste Bauteil beweglich gegenüber dem zweiten ist. Bei dem bekannten Verfahren wird zunächst der Anschlagpuffer an einem der Bauteile befestigt. Anschließend werden die Bauteile in eine Schließstellung überführt, wobei der Puffer zur Anlage an das zweite Bauteil gebracht wird. Durch das Zusammenwirken des Puffers mit den beiden Bauteilen im Moment des Anschlags beim Schließen erfolgt eine Selbstjustierung des Puffers in axialer Richtung.

Vor diesem Hintergrund liegt der vorliegenden Erfindung die Aufgabe zugrunde, ein Verfahren zum Ausrichten eines Anschlagpuffers sowie ein System zum Abstützen zweier Bauteile mit einem Anschlagpuffer zu schaffen, welche eine einfache Justierung in radialer Richtung ermöglichen.

Diese Aufgabe wird durch ein Verfahren mit den Merkmalen des Anspruchs 1 gelöst. Vorteilhafte Ausgestaltungen sind den Unteransprüchen zu entnehmen.

Nach dem erfindungsgemäßen Verfahren erfolgt die Ausrichtung eines Anschlagpuffers zum Abstützen eines ersten Bauteils an einem zweiten Bauteil dadurch, dass der Anschlagpuffer zunächst an einem der Bauteile befestigt wird. Eine solche Befestigung kann mit Hilfe von bekannten Befestigungsmitteln erfolgen, beispielsweise sei die Befestigung über Schrauben und Kontermuttern erwähnt. Bei dieser Befestigung des Puffers an einem der Bauteile kann auch gleichzeitig eine Justierung des Puffers in axialer Richtung erfolgen. Das ist über zu fixierende Gewinde möglich und erfolgt bevorzugt anhand von Erfahrungswerten. Es ist aber auch jede andere geeignete Art der Befestigung und der axialen Justierung des Puffers denkbar.

Anschließend werden die beiden gegeneinander beweglichen Bauteile in eine Schließstellung und damit der Puffer zur Anlage oder zum Anschlag an das andere Bauteil gebracht. Wenn im Folgenden von "Moment des Anschlags" gesprochen wird, ist damit der Moment gemeint, in dem in Schließstellung der an einem Bauteil befestigte Puffer das andere Bauteil berührt und somit der Puffer und die beiden Bauteile zusammenwirken. Wie stark diese Berührung ausfällt, hängt von der zuvor erfolgten Justierung des Puffers in axialer Richtung und diese wiederum von der für den speziellen Einsatzzweck erforderlichen Abstützkraft ab. Beim Schließen, d.h. in dem Moment des Anschlags des Puffers an einem Bauteil, erfolgt erfindungsgemäß durch das Zusammenwirken des Puffers mit den beiden zueinander beweglichen Bauteilen eine Selbstjustierung des Puffers in radialer Richtung.

Der besondere Vorteil der Erfindung ist darin zu sehen, dass eine Justierung des Puffers in radialer Richtung möglich ist. Hinzu kommt, dass diese Justierung während der Montage einfach durch Schließen des beweglichen Bauteils gegenüber dem feststehenden Bauteil erfolgt. Weil aufwendige Nachstelloperationen entfallen, können mit Hilfe des erfindungsgemäßen Verfahrens Montagezeiten erheblich verkürzt werden. Es ist zudem ein schneller Austausch von abgenutzten Puffern möglich, weil das erfindungsgemäße Verfahren sowohl vor als auch nach dem Lackieren erfolgen kann.

Gemäß einer Variante des erfindungsgemäßen Verfahrens erfolgt die Selbstjustierung über relativ zueinander bewegliche Teile des Puffers sowie Führungen in dem Blech, gegen das der Puffer anschlägt. Im Moment des Anschlags wird ein Teil des Puffers durch die Führung im Blech in radialer Richtung solange verschoben, bis der Puffer in der Schließstellung genau in der Führung in dem Blech sitzt.

Es ist auch denkbar, die Selbstjustierung über ein vom Puffer getrenntes Bauteil und Führungen in den Bauteilen erfolgt, in die das vom Puffer getrennte Teil vor dem Schließen des beweglichen Bauteils eingelegt wird.

Es ist möglich, die zueinander beweglichen Teile des Puffers in der mittels Selbstjustierung gefundenen Stellung zu fixieren, während sich die Bauteile in Schließstellung befinden. Alterntiv können die Bauteile aber auch wieder in eine geöffnete Stellung überführt werden, bevor die zueinander beweglichen Teile fixiert werden. Eine Fixierung kann beispielsweise durch Klebstoff erfolgen, der aushärtet, sobald die Pufferteile ihre durch Selbstjustierung gefundene Endposition erreicht haben. Denkbar ist aber auch die Fixierung mittels Schrauben und/oder Bolzen zu erzielen, die so in den Puffer eingebracht werden, dass die zueinander beweglichen Teile des Puffers sich nicht mehr gegeneinander verschieben können. Die Fixierung mittels Klebstoff bringt den Vorteil mit sich, dass sie ebenso wie die Justierung von selbst erfolgen kann, was sich positiv auf die Montagezeiten auswirkt, weil kein zusätzlicher Arbeitsschritt erforderlich ist.

Gemäß einer weiteren Variante des erfindungsgemäßen Verfahrens erfolgt die Selbstjustierung dadurch, dass der in einem der Bauteile befestigte Puffer eine Sollbruchstelle aufweist. Im Moment des Anschlags mit dem anderen Bauteil wird der untere Teil des Puffers fest mit diesem Bauteil verbunden und beim Öffnen der Bauteile wird der Puffer an der Sollbruchstelle getrennt. Auf diese Weise erhält man an jedem Bauteil einen Teil des Puffers. Beide Teile sind in radialer Richtung optimal aufeinander abgestimmt sind, d.h. dass sie in der Schließstellung der beiden Bauteile immer wieder aufeinander zu liegen kommen.

Obige Aufgabe wird aber auch durch ein System mit den Merkmalen der Ansprüche 9 und 10 gelöst. Vorteilhafte Ausführungsformen sind den Unteransprüchen zu entnehmen.

Das erfindungsgemäße System zum Abstützen eines ersten Bauteils an einem zweiten besteht gemäß einer Ausführungsform aus einem Puffer mit einem Pufferoberteil und einem Pufferunterteil, wobei das Pufferoberteil mit Hilfe von bekannten Befestigungsmitteln an einem der Bauteile befestigt werden kann. Das Pufferunterteil ist beweglich mit dem Pufferoberteil verbunden, worüber in dem Puffer selbst eine Variation des Puffers in radialer Richtung möglich wird.

Aufgrund der Tatsache, dass die Variation in radialer Richtung in dem Puffer selber angelegt ist und keine weiteren Anpassungen der abzustützenden Bauteile notwendig sind, ist es möglich, Bauteile mit einem erfindungsgemäßen Puffer nachzurüsten. Vorteilhaft ist auch, dass eine Änderung der Bauteile - beispielsweise durch eine Modellpflege einer Fahrzeugbaurreihe - keinen Einfluß auf den erfindungsgemäßen Puffer hat. Dieser kann unverändert weiter benutzt werden.

Die bewegliche Verbindung zwischen Pufferoberteil und Pufferunterteil kann beispielsweise über einen im Querschnitt t-förmigen Abschnitt am Pufferoberteil realisiert werden, der in einen im Querschnitt t-förmigen Hohlraum in dem Pufferunterteil eingreift. Die Dimensionen von dem t-förmigen Abschnitt und dem Hohlraum sollten dabei bevorzugt so aufeinander abgestimmt sein, dass sich das Pufferunterteil in Bezug auf das Pufferoberteil in radialer Richtung bewegen kann. Die beiden Teile des Puffers können aber auch über ein exzentrisches Mittelstück miteinander verbunden werden, das beispielsweise aus zwei außermittig angeordneten Kreisscheiben besteht.

Gemäß einer weiteren Ausführungsform ist das Pufferoberteil lösbar mit dem Pufferunterteil verbunden. Die beiden Teile können beispielsweise über eine Sollbruchstelle in Form eines Filmscharniers miteinander verbunden sein. Diese Ausgestaltung ermöglicht es, das Pufferoberteil zunächst an einem der beweglichen Bauteile zu befestigen und im Moment des Anschlags das Pufferunterteil mit dem anderen Bauteil zu verbinden. Beim anschließenden Überführen der beiden Bauteile in eine geöffnete Stellung werden Unterteil und Oberteil voneinander getrennt. Wenn die Bauteile nun wieder in eine Schließposition überführt werden, treffen Pufferoberteil und Pufferunterteil immer wieder aufeinander. Die Trennstelle zwischen Pufferoberteil und Pufferunterteil kann beispielsweise eine konische Form aufweisen, wodurch das Unterteil die Funktion einer Führung des Pufferoberteils in radialer Richtung übernimmt.

Zur Befestigung des Pufferunterteils an einem der Bauteile kann beispielsweise Klebstoff verwendet werden, der in Schließstellung aushärtet. Diese Variante hat den Vorteil, daß das Befestigen des Pufferunterteils von selbst erfolgt, während die Bauteile eine Schließstellung einnehmen. Es können aber auch Gewindebolzen am Pufferunterteil vorgesehen sein, die in Bohrungen eingreifen, in denen eine Bewegung in radialer Richtung möglich ist, und dort mit gekannten Mitteln fixiert werden.

Gemäß einer anderen Ausführungsform sind Pufferoberteil und Pufferunterteil nicht miteinander verbunden. Das Pufferunterteil weist jedoch einen Bereich auf, auf den mindestens ein Abschnitt des Pufferoberteils in Schließstellung auftrifft. Die Dimension dieses Bereichs ist so gewählt, daß der Abschnitt des Pufferoberteils Spiel in radialer Richtung hat.

Im folgenden werden das erfindungsgemäße Verfahren sowie der erfindungsgemäße Puffer anhand der in der Zeichnung dargestellten Ausführungsbeispiele des näheren erläutert. Es zeigen:
- Fig. 1:: eine Seitenansicht eines erfindungsgemäßen Anschlagpuffers vor dem Moment des Anschlags;
- Fig. 2:: eine Seitenansicht des erfindungsgemäßen Anschlagpuffers gemäß Fig. 1 nach dem Moment des Anschlags;

- Fig. 3:: eine Seitenansicht einer weiteren Ausführungsform eines erfindungsgemäßen Anschlagpuffers nach dem Moment des Anschlags;
- Fig. 4:: eine Seitenansicht einer weiteren Ausführungsform eines erfindungsgemäßen Anschlagpuffers nach dem Moment des Anschlags;
- Fig. 5:: eine Seitenansicht einer weiteren Ausführungsform eines erfindungsgemäßen Anschlagpuffers vor dem Moment des Anschlags und
- Fig. 6:: eine Seitenansicht eines Anschlagpuffers gemäß Fig. 5 nach dem Moment des Anschlags.

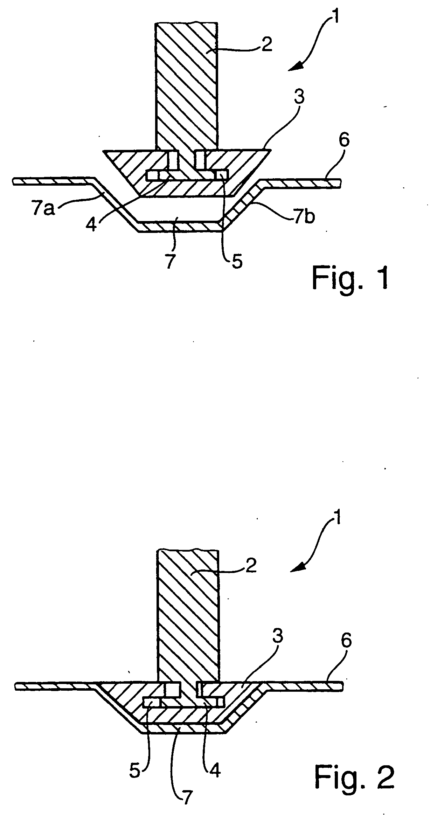

Der in Fig. 1 dargestellte Anschlagpuffer 1 besteht aus einem Pufferoberteil 2 und einem Pufferunterteil 3, das als Auflage des Puffers 1 auf ein Blech 6 dient. Das Pufferoberteil 2 wird über sein oberes nicht dargestelltes Ende an einem ersten ebenfalls nicht dargestellten Bauteil befestigt. Das erste Bauteil kann beispielsweise eine Motorhaube eines Kraftfahrzeugs sein, die schwenkbar an einem zweiten Bauteil, nämlich der Karosserie des Kraftfahrzeugs, befestigt ist. Es ist aber auch möglich, daß das Pufferoberteil 2 an dem feststehenden Bauteil befestigt wird. Die Befestigung des Oberteils 2 an dem ersten beweglichen Bauteil erfolgt über bekannte Befestigungsmittel, wie Clips, Schrauben, Bolzen etc. In der Regel werden mehrere Puffer zur Abstützung der beiden Bauteile gegeneinander vorgesehen sein.

Das untere Ende des Pufferoberteils 2 weist einen im Querschnitt t-förmigen Abschnitt 4 auf. Das Pufferunterteil 3 hat eine konische Form und weist einen im Querschnitt t-förmigen Hohlraum 5 auf. Der t-förmige Abschnitt 4 des Pufferoberteils 2 ist in dem t-förmigen Hohlraum 5 des Pufferunterteils 3 angeordnet. Der Hohlraum 5 ist breiter als der Abschnitt 4, so daß sich das Pufferunterteil 3 relativ zum Pufferoberteil 2 in radialer Richtung bewegen kann. Hohlraum 5 und Abschnitt 4 sind in ihren Dimensionen so aufeinander abgestimmt, daß eine Bewegung in axialer Richtung und ein Heraustreten des Abschnittes 4 aus dem Hohlraum 5 nicht möglich ist.

Unterhalb des Puffers 1 ist in Fig. 1 ein Blech 6 des zweiten Bauteils, der feststehenden Karosserie, dargestellt. Dieses Blech 6 weist eine Vertiefung 7 auf, deren Seitenflanken 7a und 7b einen Winkel aufweisen, der den konischen Seitenflächen des Pufferunterteils 3 entsprechen. Die Vertiefung 7 dient der Aufnahme und Führung des Pufferunterteils 3 des Puffers 1, wenn sich die Bauteile in Schließstellung befinden.

Bei der Montage des Puffers 1 erfolgt die Justierung in axialer Richtung mit Hilfe von bekannten Methoden. Beispielsweise sei hier die Justierung über eine Gewindestange und Kontermuttern genannt. Die Justierung in radialer Richtung, d.h. die Ausrichtung des Pufferunterteils 3 auf die Vertiefung 7, erfolgt erfindungsgemäß während der Montage automatisch beim ersten Schließen des beweglichen Bauteils, indem sich das gegenüber dem am ersten Bauteil befestigten Pufferoberteil 2 bewegliche Pufferunterteil 3 im Moment des Anschlags durch die aufeinander abgestimmten Formen von Pufferunterteil 3 und Vertiefung 7 solange über den t-förmigen Abschnitt 4 verschiebt, bis sie vollständig in die Vertiefung 7 eintaucht. Das Pufferunterteil 3 wird also im Moment des Anschlags durch das Zusammenwirken von Puffer 1 und Blech 6 in radialer Richtung ausgerichtet. Diese Situation ist in Fig. 2 dargestellt. Gegenüber der Darstellung in Fig. 1 ist das Pufferunterteil 3 relativ zum Pufferoberteil 2 nach rechts verschoben. In dieser Position kann eine Fixierung von Pufferoberteil 2 mit Pufferunterteil 3 erfolgen.

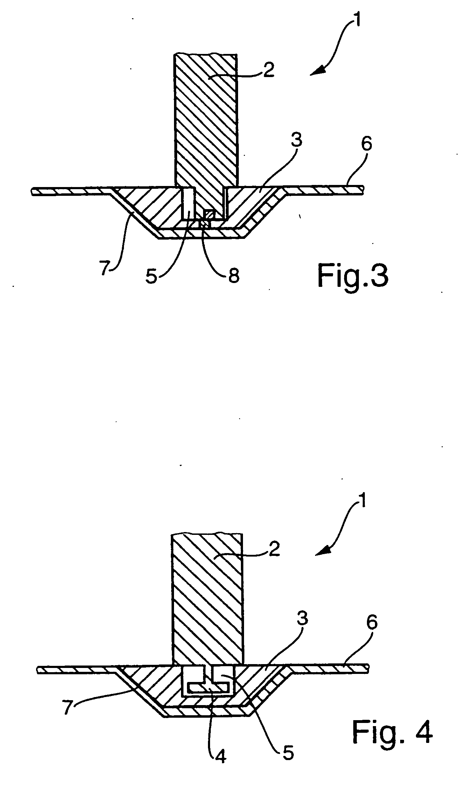

Gemäß einer anderen Ausführungsform, die in Fig. 3 dargestellt ist, sind Pufferoberteil 2 und Pufferunterteil 3 über ein exzentrisches Mittelstück 8 verbunden. Das exzentrische Mittelstück 8 besteht in dem dargestellten Ausführungsbeispiel aus zwei Kreisscheiben, die außermittig übereinander und drehbar in den Pufferteilen angeordnet sind. Es ist jedoch auch denkbar, jede andere Art von exzentrischem Mittelstück einzusetzen, welches eine Bewegung des Pufferunterteils 3 gegenüber dem Pufferoberteil 2 in radialer Richtung ermöglicht. Beim Schließen des beweglichen ersten Bauteils wird das Pufferunterteil 3 durch die Vertiefung 7 in die richtige Position gedrückt. Dabei verschiebt sich das exzentrische Mittelstück in die entsprechende Lage. Auch hier erfolgt die radiale Ausrichtung des Puffers 1 durch das Zusammenwirken von Puffer 1 und Blech 6 im Moment des Anschlags.

Die Fixierung kann bei den beschriebenen Ausführungsformen dadurch erfolgen, daß von unten durch das Pufferunterteil 3 ein nicht dargestellter Sicherungsbolzen oder eine Schraube in das Pufferoberteil 2 eingebracht wird und dadurch eine Bewegung des Pufferunterteils 3 relativ zum Pufferoberteil 2 unterbunden wird. Dabei ist jedoch wichtig, daß die bei Schließen durch Selbstjustierung des Puffers 1 gefundene Position das Pufferunterteil 3 nicht wieder verschoben wird. Die Fixierung kann aber auch dadurch erfolgen, daß in den Hohlraum 5 ein Klebstoff eingebracht wird, der in der Schließstellung nach erfolgter Selbstjustierung aushärtet. Diese Möglichkeit bringt den besonderen Vorteil mit sich, daß neben der Justierung auch die Fixierung von selbst erfolgt, während sich die beiden zueinander beweglichen Bauteile in Schließstellung befinden. Nach erfolgter Fixierung kann der Puffer 1 auch Kräfte in radialer Richtung aufnehmen und so das bewegliche Teil in dieser Richtung abzustützen.

Es ist auch denkbar, daß zwischen Pufferoberteil 2 und Pufferunterteil 3 zunächst keine Verbindung besteht (vgl. Fig. 4). Dann kann das Pufferunterteil 3 in die Vertiefung 7 eingelegt werden und Oberteil 2 mit Unterteil 3 in Schließstellung der beiden Bauteile fixiert werden. Die Fixierung kann wie zuvor beschrieben über Sicherungsbolzen, Schrauben oder Klebstoff erfolgen. Wenn eine Fixierung über Klebstoff erfolgen soll, kann in dem Pufferunterteil 3 eine Aussparung 5 vorgesehen sein, in die ein Abschnitt 4 des Pufferoberteils 2 eingreift. Die Aussparung 5 muß dabei in radialer Richtung größer sein, als der Abschnitt 4 des Oberteils 2, damit eine Justierung in dieser Richtung möglich ist. Die Aussparung 5 kann mit Klebstoff gefüllt sein, der dann aushärtet, wenn Pufferoberteil 2 und Pufferunterteil 3 im Moment des Anschlags ihre in radialer Richtung optimal zueinander ausgerichteten Positionen eingenommen haben. Zur besseren Anbindung von Oberteil 2 und Unterteil 3 kann der Abschnitt 4 des Oberteils 2 eine im Querschnitt t-förmige Gestalt aufweisen.

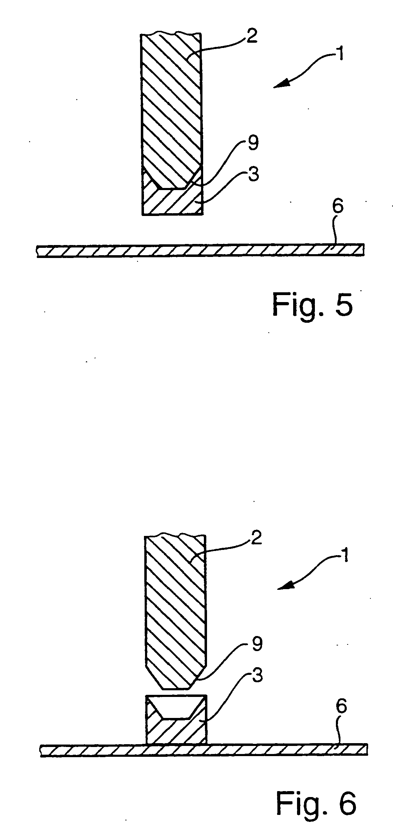

Die in den Fig. 5 und 6 dargestellte Ausführungsform verfolgt ein anderes Prinzip zur Selbstjustierung des Puffers 1 in radialer Richtung. Der dargestellte Puffer 1 besteht zwar wiederum aus zwei Teilen, einem Pufferoberteil 2 und einem Pufferunterteil 3. Diese sind jedoch so miteinander verbunden, daß eine relative Bewegung zwischen Oberteil 2 und Unterteil 3 nicht möglich ist. Die Verbindung zwischen den beiden Pufferteilen 2 und 3 ist jedoch in Form einer Sollbruchstelle so gestaltet, daß sie leicht getrennt werden kann. Diese Sollbruchstelle kann beispielsweise durch Filmscharniere, das sind dünne Kunststoffstege, zwischen Pufferoberteil 2 und Pufferunterteil 3 realisiert werden.

Während der Montage wird der Puffer 1 wie bei den zuvor beschriebenen Ausführungsbeispielen mit dem ersten, beweglichen Bauteil über bekannte Mittel befestigt. Auch hier ist eine Befestigung des Pufferoberteils 2 an dem zweiten, feststehenden Bauteil möglich. Sodann wird das erste bewegliche Bauteil in eine Schließstellung gebracht. Dadurch kommt der Puffer 1 mit der unteren Seite des Pufferunterteils 3 in Anlage mit dem Blech 6. In dieser Position wird das Pufferunterteil 3 an dem Blech 6 fixiert. Das kann über Schrauben und Muttern oder nach einer bevorzugten Ausführungsform mit Hilfe eines an der Unterseite des Pufferunterteils 3 angebrachten Klebstoffes, der in Schließstellung der beiden Bauteile, sobald das Pufferunterteil 3 in Anlage an das Blech 6 gelangt, aushärtet, erfolgen. Wenn das Pufferunterteil 3 fest mit dem Blech 6 verbunden ist, kann das erste bewegliche Bauteil wieder geöffnet werden. Dabei wird die lose Verbindung zwischen Pufferoberteil 2 und Pufferunterteil 3 getrennt - es reißen die Filmscharniere - so daß man einen zweiteiligen Puffer 1 erhält, dessen Pufferoberteil 2 an einem der zueinander beweglichen Bauteile und dessen Pufferunterteil 3 an dem anderen der Bauteile befestigt ist.

Da Pufferoberteil 2 und Pufferunterteil 3 erst getrennt werden, nachdem sie in Schließstellung an den beiden Bauteilen befestigt worden sind, sind sie in radialer Richtung optimal zueinander ausgerichtet. Die Trennstelle 9 ist konisch ausgeführt, so daß das Pufferunterteil 3 in bezug auf das Pufferoberteil 2 als Führung wirkt. Das Pufferoberteil 2 kann nach erfolgter Montage sowohl Kräfte in axialer Richtung als auch in radialer Richtung aufnehmen und somit die Motorhaube optimal abstützen.

## Patentansprüche

1. Verfahren zum Ausrichten eines Anschlagpuffers (1) zum Abstützen eines ersten Bauteils an einem zweiten (6), wobei das erste Bauteil beweglich gegenüber dem zweiten (6) ist, insbesondere zum Abstützen eines beweglichen Karosserieteils eines Kraftfahrzeugs an einem festen Karosserieteil,
- bei dem zunächst der Anschlagpuffer (1) an einem der Bauteile befestigt wird,
- sodann die Bauteile in eine Schließstellung und damit der Puffer (1) durch eine Axial bewegung zur Anlage an das andere Bauteil gebracht wird,
- wobei durch das Zusammenwirken des Puffers (1) mit den beiden Bauteilen im Moment des Anschlags beim Schließen eine Selbstjustierung des Puffers (1) erfolgt
**dadurch gekennzeichnet,**
**dass** die Selbstjustierung in radialer Richtung erfolgt.

2. Verfahren nach Anspruch 1,
**dadurch gekennzeichnet,**
**dass** die Selbstjustierung über relativ zueinander bewegliche Teile (2, 3) des Puffers (1) und Führungen (7) in den Bauteilen erfolgt, in die mindestens eines der beweglichen Pufferteile (3) im Moment des Anschlags eingreift.

3. Verfahren nach Anspruch 1,
**dadurch gekennzeichnet,**
**dass** die Selbstjustierung über ein vom Puffer getrenntes Teil und Führungen (7) in den Bauteilen erfolgt, in die das vom Puffer (1) getrennte Teil vor dem Moment des Anschlags eingelegt wird.

4. Verfahren nach einem der Ansprüche 1 bis 3,
**dadurch gekennzeichnet,**
**dass** die Pufferteile (2, 3) in der Schließstellung in der mittels Selbstjustierung gefundenen Stellung zueinander fixiert werden.

5. Verfahren nach einem der Ansprüche 1 bis 3,
**dadurch gekennzeichnet,**
**dass** das erste Bauteil nach dem Schließen in eine geöffnete Stellung gebracht wird und die beim Schließen mittels Selbstjustierung gefundene Stellung der Pufferteile (2, 3) zueinander fixiert werden.

6. Verfahren nach einem der Ansprüche 1 bis 5,
**dadurch gekennzeichnet,**
**dass** die Fixierung durch einen Klebstoff erfolgt.

7. Verfahren nach einem der Ansprüche 1 bis 5
**dadurch gekennzeichnet,**
**dass** die Fixierung mittels Schrauben und/oder Bolzen erfolgt.

8. Verfahren nach Anspruch 1 oder 2,
**dadurch gekennzeichnet,**
**dass** die Selbstjustierung **dadurch** erfolgt, dass der an einem der Bauteile befestigte Puffer (1) im Moment des Anschlags mit dem anderen Bauteil verbunden wird und **dadurch** der Puffer (1) beim Öffnen in zwei Teile (2, 3) geteilt wird, wobei die Trennstelle zwischen den beiden Pufferteilen (2, 3) als Führung (9) fungiert.

9. System zum Abstützen eines ersten Bauteils an einem zweiten (6), wobei das erste Bauteil beweglich gegenüber dem zweiten (6) ist, insbesondere zum Abstützen eines beweglichen Karosserieteils eines Kraftfahrzeugs an einem festen Karosserieteil, mit einem Puffer (1), welcher ein Pufferoberteil (2) und ein Pufferunterteil (3) aufweist, wobei das Pufferoberteil (2) an einem der Bauteile befestigt ist,
**dadurch gekennzeichnet,**
**dass** der Puffer (1) einteilig und das Pufferunterteil (3) relativ zum Pufferoberteil (2) radial beweglich ist.

10. System zum Abstützen eines ersten Bauteils an einem zweiten (6), wobei das erste Bauteil beweglich gegenüber dem zweiten (6) ist, insbesondere zum Abstützen eines beweglichen Karosserieteils eines Kraftfahrzeugs an einem festen Karosserieteil, mit einem Puffer (1), welcher ein Pufferoberteil (2) und ein Pufferunterteil (3) aufweist, wobei das Pufferoberteil (2) an einem der Bauteile befestigt ist,
**dadurch gekennzeichnet,**
**dass** der Puffer (1) zweiteilig ist, wobei das Pufferunterteil (3) einen Bereich (5) zur Aufnahme mindestens eines Abschnitts (4) des Pufferoberteils (2) aufweist und Pufferoberteil (2) und Pufferunterteil (3) in radialer Richtung beweglich zueinander angeordnet sind.

11. System nach Anspruch 9 oder 10,
**dadurch gekennzeichnet,**
**dass** das Pufferunterteil (3) eine Form aufweist, die einem Gegenstück in dem Bauteil entspricht, das der Puffer (1) im Moment des Anschlags berührt.

12. System nach einem der Ansprüche 9 bis 11,
**dadurch gekennzeichnet,**
**dass** das Pufferunterteil (3) im Querschnitt einen t-förmigen Hohlraum (5) aufweist.

13. System nach einem der Ansprüche 9 bis 12,
**dadurch gekennzeichnet,**
**dass** das Pufferoberteil (2) im Querschnitt einen t-förmigen Abschnitt (4) aufweist, der in den Hohlraum (5) eingreift.

14. System nach einem der Ansprüche 9, 11 bis 13,
**dadurch gekennzeichnet,**
**dass** der Hohlraum (5) größer ist als der Abschnitt (4), so dass sich das Pufferunterteil (3) relativ zum Pufferoberteil (2) in radialer Richtung bewegen kann.

15. System nach Anspruch 9 oder 10,
**dadurch gekennzeichnet,**
**dass** Pufferoberteil (2) und Pufferunterteil (4) über ein exzentrisches Mittelstück (8) beweglich miteinander verbunden sind.

16. System nach Anspruch 15,
**dadurch gekennzeichnet,**
**dass** das exzentrische Mittelstück (8) aus zwei außermittig übereinander angeordnete Kreisscheiben besteht.

17. Verfahren nach Anspruch 1,
**dadurch gekennzeichnet,**
**daß** der Puffer (1) einteilig ist und Pufferunterteil (3) und Pufferoberteil (2) lösbar miteinander und radial positioniert zueinander verbunden sind, wobei eine radiale Bewegung zwischen Puffer (1) und dem anderen Bauteil (6) möglich ist und danach das Pufferunterteil (3) an dem anderen (6) der beiden Bauteile befestigt wird und das Pufferoberteil (2) und -unterteil (3) voneinander gelöst werden.

18. Verfahren nach Anspruch 17,
**dadurch gekennzeichnet,**
**daß** Pufferunterteil (3) und Pufferoberteil (2) über ein Filmscharnier miteinander verbunden sind.

19. Verfahren nach Anspruch 17 oder 18,
**dadurch gekennzeichnet,**
**daß** die Trennstelle zwischen Pufferoberteil (2) und Pufferunterteil (3) konisch verläuft.

20. Verfahren nach einem der Ansprüche 17 bis 19,
**dadurch gekennzeichnet,**
**daß** das Pufferunterteil (3) Mittel zum Befestigen an einem der Bauteile aufweist.

21. Verfahren nach Anspruch 20,
**dadurch gekennzeichnet,**
**daß** das Pufferunterteil (3) eine Klebstoffschicht zum Befestigen des Pufferunterteils (3) an einem der Bauteile aufweist.

22. Verfahren nach Anspruch 20,
**dadurch gekennzeichnet,**
**daß** das Pufferunterteil (3) einen Gewindebolzen zum Befestigen des Pufferunterteils (3) an einem der Bauteile aufweist.

## Claims

1. Method for the orientation of a stop buffer (1) for the support of a first component on a second one (6), such that the first component can be moved relative to the second one (6), in particular for the support of a movable part of a vehicle body against a fixed part thereof,
- in which the stop buffer (1) is first fixed on one of the two components,
- and the components are brought to a closing position and the buffer (1) is then brought by an axial movement into contact with the other component,
- such that by the co-operation of the buffer (1) with the two components at the moment of contact on closing, a self-adjustment of the buffer (1) takes place,
**characterised in that**
the said self-adjustment takes place in the radial direction.

2. Method according to Claim 1,
**characterised in that**
the self-adjustment takes place by virtue of parts (2, 3) of the buffer (1) that can move relative to one another and guides (7) in the components, in which at least one of the movable buffer portions (3) engages at the moment of contact.

3. Method according to Claim 1,
**characterised in that**
the self-adjustment takes place by virtue of a part separate from the buffer and guides (7) in the component in which the said part separate from the buffer (1) is engaged just before the moment of contact.

4. Method according to any of Claims 1 to 3,
**characterised in that**
in the closed position the buffer portions (2, 3) are fixed in the positions relative to one another established by the self-adjustment.

5. Method according to any of Claims 1 to 3,
**characterised in that**
after closing, the first component is brought to an open position, and the positions of the buffer portions (2, 3) relative to one another established by self-adjustment during closing are then fixed.

6. Method according to any of Claims 1 to 5,
**characterised in that**
the said fixing is carried out by means of an adhesive.

7. Method according to any of Claims 1 to 5,
**characterised in that**
the said fixing is effected by means of screws and/or bolts.

8. Method according to Claims 1 or 2,
**characterised in that**
the self-adjustment takes place **in that** at the moment of contact the buffer (1) fixed on one of the components is joined with the other component and thereby, on opening, the buffer (1) is divided into two portions (2, 3), such that the parting zone between the two portions (2, 3) of the buffer acts as a guide (9).

9. System for the support of a first component on a second component (6), such that the first component can move relative to the second one (6), in particular for the support of a movable in particular for the support of a movable part of a vehicle body against a fixed part thereof, with a buffer (1) comprising an upper buffer portion (2) and a lower buffer portion (3), the upper buffer portion (2) being fixed on one of the components,
**characterised in that**
the buffer (1) is in one piece and the lower buffer portion (3) can move radially relative to the upper buffer portion (2).

10. System for the support of a first component on a second component (6), such that the first component can move relative to the second one (6), in particular for the support of a movable in particular for the support of a movable part of a vehicle body against a fixed part thereof, with a buffer (1) comprising an upper buffer portion (2) and a lower buffer portion (3), the upper buffer portion (2) being fixed on one of the components,
**characterised in that**
the buffer (1) is in two pieces, the lower buffer portion (3) has an area (5) to receive at least part (4) of the upper buffer portion (2) and the upper (2) and lower (3) buffer portions are arranged movably relative to one another in the radial direction.

11. System according to Claims 9 or 10,
**characterised in that**
the shape of the lower buffer portion (3) corresponds with a counterpart in the component which the buffer (1) touches at the moment of contact.

12. System according to any of Claims 9 to 11,
**characterised in that**
in cross-section, the lower buffer portion (3) comprises a t-shaped hollow space (5).

13. System according to any of Claims 9 to 12,
**characterised in that**
in cross-section, the upper buffer portion (2) comprises a t-shaped section (4) which engages in the said hollow space (5).

14. System according to any of Claims 9 and 11 to 13,
**characterised in that**
the said hollow space (5) is larger than the said section (4), so that the lower buffer portion (3) can move in the radial direction relative to the upper buffer portion (2).

15. System according to Claims 9 or 10,
**characterised in that**
the upper buffer portion (2) and the lower buffer portion (3) are connected to one another movably by means of an eccentric middle portion (8).

16. System according to Claim 15,
**characterised in that**
the eccentric middle portion (8) consists of two circular discs arranged eccentrically one above the other.

17. Method according to Claim 1,
**characterised in that**
the buffer (1) is in one piece and the upper (2) and lower (3) portions of the buffer are connected detachably and radially positioned relative to one another, such that a radial movement between the buffer (1) and the other component (6) is possible and thereafter the lower buffer portion (3) is fixed onto the said other (6) of the two components and the upper (2) and lower (3) buffer portions are released from one another.

18. Method according to Claim 17,
**characterised in that**
the lower (3) and upper (2) buffer portions are connected with one another by a film hinge.

19. Method according to Claims 17 or 18,
**characterised in that**
the separation zone between the upper (2) and lower (3) buffer portions is of conical shape.

20. Method according to any of Claims 17 to 19,
**characterised in that**
the lower buffer portion (3) comprises means for fixing it onto one of the components.

21. Method according to Claim 20,
**characterised in that**
the lower buffer portion (3) has a layer of adhesive to enable the said lower buffer portion (3) to be fixed onto one of the components.

22. Method according to Claim 20,
**characterised in that**
the lower buffer portion (3) comprises a threaded bolt to enable the said lower buffer portion (3) to be fixed onto one of the components.

## Revendications

1. Procédé pour aligner un tampon de butée (1) destiné à appuyer un premier composant contre un second (6), le premier composant pouvant être déplacé par rapport au second (6), plus particulièrement destiné à appuyer une partie de carrosserie mobile d'un véhicule automobile contre une partie de carrosserie fixe,
- dans lequel le tampon de butée (1) est fixé en premier lieu à l'un des composants,
- ensuite les composants sont en position de fermeture et ainsi, le tampon (1) est installé par un mouvement axial pour venir en appui sur l'autre composant,
- l'interaction du tampon (1) et des deux composants au moment de la butée lors de la fermeture permettant d'ajuster le tampon (1) automatiquement,
**caractérisé en ce**
**que** l'ajustage automatique est effectué dans le sens radial.

2. Procédé selon la revendication 1,
**caractérisé en ce**
**que** l'ajustage automatique est effectué via des pièces (2, 3) du tampon (1) mobiles relativement les unes par rapport aux autres et des guidages (7) dans les composants, dans lesquels au moins l'une des parties mobiles du tampon (3) vient en prise au moment de la butée.

3. Procédé selon la revendication 1,
**caractérisé en ce**
**que** l'ajustage automatique est effectué via une partie séparée du tampon et des glissières (7) dans les composants dans lesquels la partie séparée du tampon (1) est introduite avant le moment de la butée.

4. Procédé selon l'une quelconque des revendications 1 à 3,
**caractérisé en ce**
**que** les parties du tampon (2, 3) en position de fermeture sont fixées les unes aux autres dans la position trouvée au moyen de l'ajustage automatique.

5. Procédé selon l'une quelconque des revendications 1 à 3,
**caractérisé en ce**
**que** le premier composant est placé après la fermeture en une position ouverte et en ce que les parties du tampon (2, 3) sont fixées l'une par rapport à l'autre dans la position trouvée au moyen de l'ajustage automatique lors de la fermeture.

6. Procédé selon l'une quelconque des revendications 1 à 5,
**caractérisé en ce**
**que** la fixation est effectuée par de la colle.

7. Procédé selon l'une quelconque des revendications 1 à 5,
**caractérisé en ce**
**que** la fixation est effectuée au moyen de vis et/ou de boulons.

8. Procédé selon la revendication 1 ou 2,
**caractérisé en ce**
**que** l'ajustage automatique est effectué par le fait que le tampon (1) fixé à l'un des composants au moment de la butée est relié à l'autre composant et ainsi, le tampon (1) est séparé lors de l'ouverture en deux parties (2, 3), le point de séparation entre les deux parties du tampon (2, 3) fonctionnant comme un guidage (9).

9. Système destiné à appuyer un premier composant contre un second (6), le premier composant pouvant être déplacé par rapport au second (6), plus particulièrement destiné à appuyer une partie de carrosserie mobile d'un véhicule automobile contre une partie de carrosserie fixe, avec un tampon (1) qui présente une partie supérieure (2) et une partie inférieure (3), la partie supérieure du tampon (2) étant fixée à l'un des composants,
**caractérisé en ce**
**que** le tampon (1) est d'un seul tenant et en ce que la partie inférieure du tampon (3) peut être déplacée radialement par rapport à la partie supérieure du tampon (2).

10. Système destiné à appuyer un premier composant contre un second (6), le premier composant pouvant être déplacé par rapport au second (6), plus particulièrement destiné à appuyer une partie de carrosserie mobile d'un véhicule automobile contre une partie de carrosserie fixe, avec un tampon (1) qui présente une partie supérieure (2) et une partie inférieure (3), la partie supérieure du tampon (2) étant fixée à l'un des composants,
**caractérisé en ce**
**que** le tampon (1) est composé de deux parties, la partie inférieure du tampon (3) présentant une zone (5) pour recevoir au moins une section (4) de la partie supérieure du tampon (2) et en ce que la partie supérieure du tampon (2) et la partie inférieure du tampon (3) sont disposées l'une par rapport à l'autre de façon à pouvoir être déplacées dans le sens radial.

11. Système selon la revendication 9 ou 10,
**caractérisé en ce**
**que** la partie inférieure du tampon (3) présente une forme qui correspond à un pendant dans le composant que touche le tampon (1) au moment de la butée.

12. Système selon l'une quelconque des revendications 9 à 11,
**caractérisé en ce**
**que** la partie inférieure de tampon (3) présente en coupe transversale une cavité (5) en forme de t.

13. Système selon l'une quelconque des revendications 9 à 12,
**caractérisé en ce**
**que** la partie supérieure du tampon (2) présente en coupe transversale une section (4) en forme de t qui s'engage dans la cavité (5).

14. Système selon l'une quelconque des revendications 9, 11 à 13,
**caractérisé en ce**
**que** la cavité (5) est plus grande que la section (4) de sorte que la partie inférieure du tampon (3) peut se déplacer dans le sens radial par rapport à la partie supérieure du tampon (2).

15. Système selon la revendication 9 ou 10,
**caractérisé en ce**
**que** la partie supérieure du tampon (2) et la partie inférieure du tampon (4) sont reliées ensemble de façon à pouvoir être déplacées via une pièce intermédiaire (8) excentrique.

16. Système selon la revendication 15,
**caractérisé en ce**
**que** la pièce intermédiaire (8) excentrique est composée de deux disques circulaires disposés l'un sur l'autre de manière excentrée.

17. Procédé selon la revendication 1,
**caractérisé en ce**
**que** le tampon (1) est d'un seul tenant et en ce que la partie inférieure (3) et la partie supérieure (2) du tampon sont reliées l'une à l'autre de manière à pouvoir être détachées et positionnées radialement, un mouvement radial entre le tampon (1) et l'autre composant (6) étant possible et ensuite la partie inférieure du tampon (3) étant fixée à l'autre (6) composant et la partie supérieure (2) et la partie inférieure (3) du tampon étant détachées l'une de l'autre.

18. Procédé selon la revendication 17,
**caractérisé en ce**
**que** la partie inférieure (3) et la partie supérieure (2) du tampon sont reliées l'une à l'autre via une charnière à film.

19. Procédé selon la revendication 17 ou 18,
**caractérisé en ce**
**que** le point de séparation entre la partie supérieure (2) et la partie inférieure (3) du tampon s'étend de manière conique.

20. Procédé selon l'une quelconque des revendications 17 à 19,
**caractérisé en ce**
**que** la partie inférieure (3) du tampon présente des moyens de fixation à l'un des composants.

21. Procédé selon la revendication 20,
**caractérisé en ce**
**que** la partie inférieure (3) du tampon présente une couche de colle pour fixer la partie inférieure (3) du tampon à l'un des composants.

22. Procédé selon la revendication 20,
**caractérisé en ce**
**que** la partie inférieure (3) du tampon présente un boulon fileté pour fixer la partie inférieure (3) du tampon à l'un des composants.
